# EUROPÄISCHE PATENTSCHRIFT

(11) **EP 4 177 498 B1**
(45) Veröffentlichungstag und Bekanntmachung des Hinweises auf die Patenterteilung: **10.04.2024**
(21) Anmeldenummer: 22202846.6
(22) Anmeldetag: 20.10.2022
(51) Int. Cl.: F16H 63/50, F16H 61/4148

(54) **ARBEITSMASCHINE MIT EINER HYDROMECHANISCHEN ANTRIEBSEINHEIT**
WORKING MACHINE WITH A HYDRO-MECHANICAL DRIVE UNIT
MACHINE DE TRAVAIL AVEC UNE UNITÉ D'ENTRAÎNEMENT HYDROMÉCANIQUE

(30) Priorität: 04.11.2021 DE 102021128719
(43) Veröffentlichungstag der Anmeldung: 10.05.2023
(73) Patentinhaber: Weidemann GmbH, 34497 Korbach (DE)
(72) Erfinder: Weymann, Max, 35066 Frankenberg (DE); Albach, Andreas, 34576 Homburg/Efze (DE)
(74) Vertreter: Otten, Roth, Dobler & Partner mbB Patentanwälte

(56) Entgegenhaltungen:
- EP-A1- 3 656 622
- US-A1- 2010 107 996
- US-A1- 2010 286 877
- US-A1- 2017 159 804

## Beschreibung

Die Erfindung betrifft eine mobile Arbeitsmaschine mit einer hydromechanischen Antriebseinheit gemäß dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz. Außer bei z.B. Radladern mit großen Schaufeln am Hubarm weisen moderne, mobile Arbeitsmaschinen vielfach lösbar verbindbare Arbeitswerkzeuge auf, z.B. die mittels sog. "Schnellwechslern" bzw. "Wechselplatten" gehalten bzw. gelöst werden.

In den letzten Jahrzehnten haben sich z.B. bei Radladern und anderen Baufahrzeugen etc. im Wesentlichen hydromechanische bzw. hydrostatische Antriebskonzepte mit Verbrennungsmotoren und hydraulischen Antriebskomponenten durchgesetzt. So kann das Hydrauliksystem nicht nur zum Heben und ggf. Ausfahren des Hubarmes, insb. mittels Hubzylinder, sondern auch zum Antreiben der Antriebs- bzw. Laufräder oder von Antriebsketten, insb. mittels Hydraulikmotoren, verwendet werden.

Gerade bei Arbeits- bzw. Baufahrzeuge, wie z.B. Radlader, Teleskoplader, Traktoren, etc., der kleineren Leistungsklassen ist der sogenannte "Hydrostat" also ein hydrostatisches Getriebe zu einem Standard geworden. Die vom Verbrennungsmotor kommende Leistung wird in diesen Getrieben durch eine Kombination von hydraulischen Verstellpumpen und Hydraulikmotoren umgewandelt und bewirkt somit, dass der Wirkungsbereich der Hydraulikkomponenten sehr nahe an der Leistungskennlinie des Dieselmotors liegt. Im Vergleich zum direkten Antrieb mit einem Verbrennungsmotor kann der hydrostatische Fahrantrieb dadurch mit einer bedeutend niedrigeren Dieselmotordrehzahl betrieben werden. Dies kommt der Arbeitsweise von Baufahrzeugen wie eines Laders etc. sehr entgegen und sorgte in den letzten Jahrzehnten für messbare Kraftstoffeinsparungen gegenüber früheren, rein mechanischen Antrieben mit Verbrennungs-/Dieselmotoren.

Es hat sich jedoch gezeigt, dass gerade bei den derzeit üblichen, vergleichsweise kleinen Drehzahlen der Verbrennungsmotoren das Antriebssystem bzw. der Verbrennungsmotor stark erhitzen oder gar überhitzen können, da das Kühl- bzw. Lüftersystem nur bedingt ausreichend kühle Luftmengen zur Verfügung stellt. Für den Fall, dass der Motor bzw. das Kühlsystem eine vorgegebene, hinterlegte Soll-Grenz-Temperatur, insb. Überhitzungstemperatur, erreicht, wurde als Überhitzungsschutzmaßnahme ggf. eine Notabschaltung oder ein Notbetrieb mit reduzierter Motorleistung bzw. Kraftstoffzugabe/ -einspritzung notwendig. So fällt bei diesen Arbeitsmaschinen bzw. Baufahrzeugen nämlich der kühlende Luftstrom vom Fahrtwind üblicherweise im Normalbetreib weitestgehend weg. Das bedeutet, dass üblicherweise die Kühlung bzw. Konvektion fast ausschließlich durch einen oder mehrere Lüfter und nicht durch den Luftstrom bei großen Fahrgeschwindigkeiten, wie z.B. ca. 50km/h oder mehr, erfolgt.

Dementsprechend wurden bislang die Kühlsysteme bzw. Lüfter in der Weise ausgelegt bzw. dimensioniert, dass z.B. größere Wärmeüberträger und/oder leistungsfähigere Lüfter/-antriebe verwendet werden mussten. Dies führt jedoch zu erheblichen Nachteilen wie einerseits ein größerer Bauraumbedarf und steigende Kosten und andererseits größere Geräuschemissionen sowie steigende sog. "parasitäre Verluste".

Auch sind bereits Kühlsysteme im Einsatz, bei denen die jahrzehntelang übliche Praxis der direkten mechanischen Kopplung des Lüfters mit dem Verbrennungsmotor bzw. dessen Motorwelle dahingehend verändert wurde, dass eine elektronische Steuereinheit unter Zuhilfenahme entspr. Temperatursensoren den Lüfterantrieb bzw. die Lüfterdrehzahl an den Kühlleistungsbedarf von Hydrauliköl und/oder Kühlmittel/-wasser anpasst (siehe z.B. US2010/107996A).

### Aufgabe und Vorteile der Erfindung

Aufgabe der Erfindung ist es demgegenüber, eine mobile Arbeitsmaschine vorzuschlagen, die wenigstens teilweise die Nachteile des Standes der Technik verbessert, insbesondere ein Überhitzen oder gar eine Notabschaltung bzw. ein Notbetrieb des Verbrennungsmotors wirkungsvoll verhindert wird und/oder wirtschaftlich günstig und/oder platzsparend verwirklicht werden kann.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße mobile Arbeitsmaschine dadurch aus, dass in einem Grenztemperatur-Betrieb, wobei die Ist-Betriebstemperatur größer als oder gleich wie die Soll-Grenz-Temperatur ist, die elektrische und/oder elektronische Kontrolleinheit derart den Verbrennungsmotor kontrolliert, dass sich die Motorwelle des Verbrennungsmotors mit einer ersten Drehzahl dreht, wobei die erste Drehzahl der Motorwelle größer als die Normal-Drehzahl der Motorwelle im Normal-Betrieb ist. Hierbei ist in vorteilhafter Weise die Normal-Drehzahl im Sinn der Erfindung die Drehzahl, die der Verbrennungsmotor unmittelbar vor dem Grenztemperatur-Betrieb aufweist/aufwies.

Gemäß der Erfindung wird somit beim Auftreten einer möglichen Gefahr einer Überhitzung des Verbrennungsmotors, nicht wie bislang der Verbrennungsmotor gedrosselt bzw. in einen Notbetrieb, insb. mit geringerer Kraftstoffzugabe, versetzt, sondern im krassen Gegenteil hierzu, der Verbrennungsmotor bzw. dessen Motorwelle beschleunigt und mit größerer Drehzahl betrieben.

Dies stellt eine vollkommene Abkehr des bislang Üblichen dar und ist sicherlich für viele Fachleute, zumindest auf den ersten Blick, sogar widersprüchlich zur bisherigen Lehre bzw. Praxiserfahrung.

Die Erfindung macht sich jedoch zunutze, dass gerade moderne Verbrennungskraftmaschinen bzw. Dieselmotoren mit elektronischer Motorsteuerung eine Leistungskennlinie aufweisen, wobei die Leistung, insb. maximale Leistung des Motors, nicht mehr mit der Motordrehzahl stetig anwächst, sondern wobei die Leistung im oberen Drehzahlbereich stagniert oder sogar zum Teil wieder sinkt. Da der Kühlleistungsbedarf eines Verbrennungsmotors mit dessen Leistung korreliert, kann nun gemäß der Erfindung dies in vorteilhafter Weise für eine verbesserte Kühlung verwendet werden. So wird bei den zuvor genannten modernen Verbrennungsmotoren die höhere Drehzahl der Motorwelle für eine größere Kühlleistung bzw. Kühlerdrehzahl nutzbar, ohne dass die Motorleistung und damit der Kühlleistungsbedarf sich wesentlich verändert bzw. steigt. Dementsprechend steht dem Nutzer bzw. der Nutzung der mobilen Arbeitsmaschine weiterhin die gleiche/volle Leistung zur Verfügung, jedoch mit verbesserter bzw. stärkerer Kühlleistung. Bei Verbrennungsmotoren mit sinkender Leistung im obersten Drehzahlbereich kann sogar eine größere Kühlleistung bei sinkendem Kühlleistungsbedarf des Verbrennungsmotors realisiert werden.

So kann gemäß der Erfindung ein Kühlsystem verwirklicht werden, das besonders effizient, platzsparend und konstruktiv sowie wirtschaftlich günstig ist.

In einer bevorzugten Weiterbildung der Erfindung ist vorgesehen, dass im Grenztemperatur-Betrieb die elektrische und/oder elektronische Kontrolleinheit derart die Hydraulik-Energieübertragungseinheit kontrolliert, dass sich die erste Drehzahl der Motorwelle nicht auf eine Fahrgeschwindigkeit der Arbeitsmaschine und/oder einer Antriebsdrehzahl des Antriebselementes auswirkt. Mit dieser Maßnahme wird erreicht, dass die mobile Arbeitsmaschine durch die erfindungsgemäße Drehzahlerhöhung der Verbrennungskraftmaschine nicht schneller fährt, so dass keine Gefahr für den Fahrer oder andere aufgrund größerer Fahrgeschwindigkeit entsteht. Dementsprechend fährt die die mobile Arbeitsmaschine durch die erfindungsgemäße Drehzahlerhöhung der Verbrennungskraftmaschine weiterhin mit gleicher Geschwindigkeit. Das bedeutet, dass die Fahrgeschwindigkeit der mobilen Arbeitsmaschine durch die erfindungsgemäße Drehzahlerhöhung der Verbrennungskraftmaschine im Grenztemperatur-Betrieb im Wesentlichen gleich bleibt bzw. unverändert ist wie im Normal-Betrieb.

Eine vorteilhafte Entkopplung der Drehzahl der Motorwelle von der Fahrgeschwindigkeit der Arbeitsmaschine und/oder einer Antriebsdrehzahl des Antriebselementes kann mit Hilfe eines vorteilhaften Entkopplungsgetriebes bzw. einer Entkopplungseinheit zum Entkoppeln der Motorwelle vom Antriebselement bzw. Laufrad/Antriebskette etc. umgesetzt werden.

In einer bevorzugten Variante der Erfindung wird die Arbeitsmaschine so umgesetzt, dass die elektrische und/oder elektronische Kontrolleinheit derart die Hydraulik-Energieübertragungseinheit kontrolliert, dass im Grenztemperatur-Betrieb ein Grenz-Übersetzungsverhältnis der Hydraulik-Energieübertragungseinheit zwischen Antrieb und Abtrieb kleiner als ein Übersetzungsverhältnis zwischen Antrieb und Abtrieb im Normal-Betrieb ist. Hierdurch kann die Hydraulik-Energieübertragungseinheit als Entkopplungsgetriebe bzw. Entkopplungseinheit ausgebildet werden, wobei ein separates bzw. zusätzliches/zweites Entkopplungsgetriebe entbehrlich wird. Diese Doppelnutzung der Hydraulik-Energieübertragungseinheit ist konstruktiv und wirtschaftlich besonders günstig und spart zudem in erheblichem Maß Bauraum.

Vorzugsweise umfasst die Antriebseinheit wenigstens eine Kühleinheit zum Kühlen des Verbrennungsmotors und/oder weist die Kühleinheit wenigstens eine Wärmeübertragungseinheit zum Übertragen von Abwärme des Verbrennungsmotors auf ein Wärmemedium wie Kühlwasser auf und/oder umfasst die Kühleinheit wenigstens eine Kühllufteinheit zum Erzeugen einer Kühlluftströmung zum Kühlen des Verbrennungsmotors und/oder des Wärmemediums, wobei in vorteilhafter Weise wenigstens eine mechanische Verbindungseinheit und/oder mechanische Kopplungseinheit zwischen der Kühllufteinheit und dem Verbrennungsmotor und/oder der Motorwelle vorgesehen ist.

Hiermit kann auf eine aufwendige elektronische, separate Steuerung der Kühllufteinheit bzw. des Lüfters verzichtet werden, was z.B. die Betriebssicherheit erhöht und u.a. besonders kostengünstig ist und wobei z.T. herkömmliche bzw. handelsübliche Kühlsysteme bzw. Systemkomponenten hierfür verwendet werden können.

In einer vorteilhaften Ausführungsform der Erfindung kontrolliert die elektrische und/oder elektronische Kontrolleinheit derart den Verbrennungsmotor, dass im Grenztemperatur-Betrieb die erste Drehzahl eine Funktion von der Ist-Betriebstemperatur ist. So kann ein stetiges Ändern, insb. Anwachsen der ersten Drehzahl mit zunehmender Ist-Betriebstemperatur vorgesehen werden. Vorzugsweise wird beim Erreichen der Grenztemperatur-Betrieb die Drehzahl nur sehr gering angehoben, so dass die erste Drehzahl nur etwas größer als die Normal-Drehzahl ist, und bei deutlichem Überschreiten der Grenztemperatur-Betrieb wird in vorteilhafter Weise die Drehzahl sehr stark angehoben, so dass die erste Drehzahl sehr viel größer als die Normal-Drehzahl ist. Beispielsweise ist die erste Drehzahl eine Linear-, Potenz- und/oder Wurzel-Funktion von der Ist-Betriebstemperatur.

In einer alternativen Variante der Erfindung ist die Arbeitsmaschine in vorteilhafter Weise so ausgebildet, dass die elektrische und/oder elektronische Kontrolleinheit derart den Verbrennungsmotor kontrolliert, dass im Grenztemperatur-Betrieb die erste Drehzahl die Summe aus der Normal-Drehzahl plus einer definierten Drehzahldifferenz ist. Dies kann steuerungstechnisch ohne großen Aufwand realisiert werden. Beispielsweise wird beim Überschreiten der Grenztemperatur der Normaldrehzahl ein bestimmter Wert aufaddiert, so dass die Ist-Drehzahl der Motorwelle quasi einen "Sprung" macht und sehr schnell auf eine deutlich größere erste Drehzahl steigt. Hiermit wird quasi eine Sprung-Funktion realisiert.

Vorteilhafterweise umfasst die elektrische und/oder elektronische Kontrolleinheit wenigstens einen Regler, insb. einen PID-Regler, und sie kontrolliert derart den Verbrennungsmotor, dass im Grenztemperatur-Betrieb die erste Drehzahl als Regelgröße und die Ist-Betriebstemperatur als Führungsgröße ausgebildet sind. Hiermit kann eine vorteilhafte Regelung verwirklicht werden.

Grundsätzlich ist von Vorteil, dass im Fall, dass die Ist-Betriebstemperatur wieder sinkt und/oder diese wieder kleiner als oder gleich wie die Soll-Grenz-Temperatur ist, die elektrische und/oder elektronische Kontrolleinheit derart den Verbrennungsmotor kontrolliert, dass in vorteilhafter Weise der Grenztemperatur-Betrieb beendet wird und/oder sich die Motorwelle des Verbrennungsmotors wieder mit der Normal-Drehzahl der Motorwelle im Normal-Betrieb dreht. Entsprechend kann die erste Drehzahl auf die Normal-Drehzahl wieder heruntergesetzt werden. Dies spart Kraftstoff und ist somit besonders umweltfreundlich.

Generell kann im Normal-Betrieb ein sog. "Eco-Modus" bzw. "Eco-Betrieb" verwirklicht werden, wobei die Drehzahl z.B. im Vergleich zu früheren Motoren bzw. zu bislang üblicher Betriebsweise deutlich niedriger bzw. abgesenkt ist. Hierfür wird der Verbrennungsmotor in vorteilhafter Weise derart von der elektrischen und/oder elektronischen Kontrolleinheit kontrolliert, dass dieser in einem Absenk-Betrieb bzw. im "Eco-Modus" betrieben. Somit wird Kraftstoff eingespart. Dies ist kostengünstig und klimaschonend. Vielfach ist jedoch dieser sog. "Eco-Modus" bereits der sog. "Normal-Betrieb", insb. auch im Sinn der Erfindung, da klimaschonende und kraftstoffsparende Betriebsweisen/Steuerungen der Verbrennungsmotoren bzw. Arbeitsmaschinen quasi der "Normalzustand" ist.

Der nicht abgesenkte Betrieb der mobilen Arbeitsmaschine gemäß der Erfindung ist beispielsweise bei großer Belastung bzw. (hydraulischer) Leistungsanforderung beim Arbeiten mit der Arbeitsmaschine notwendig. Dies tritt z.B. beim Anheben von sehr schweren Lasten bei einem Radlader oder Teleskoplader auf, so dass das Hydrauliksystem bzw. die Hydraulikpumpe eine hohe bzw. die volle, ggf. maximale Leistung/Drehzahl des Verbrennungsmotors benötigt und die Motorwelle und damit eine Pumpwelle der Hydraulikpumpe eine sehr hohe Drehzahl aufweist.

Vorzugsweise ist wenigstens eine Aufladeeinheit, insb. ein Abgasturbolader, zum Verdichten der dem Verbrennungsmotor zugeführten Motorluft vorgesehen und/oder umfasst der Verbrennungsmotor wenigstens eine zumindest eine Einspritzdüse aufweisende Einspritzeinheit zum Einspritzen von Kraftstoff in einen Motorraum/-Zylinder und/oder in ein Saugrohr und/oder in eine Vorkammer oder dergleichen. Dies spart Kraftstoff, verbessert die Abgasqualität und ist somit besonders umweltfreundlich.

Grundsätzlich weist die Erfindung folgende Vorteile einzeln bzw. miteinander kombiniert auf:
- Kostenoptimale und kompakte Auslegung des Kühlsystems.
- Geringere Verluste durch die Möglichkeiten eines kleineren oder langsamer drehenden Lüfters im Vergleich zum bisherigen Stand der Technik.
- Kleinere Lüfterdrehzahl oder kleinerer Lüfter führt zu geringeren Geräuschemissionen.
- Zusätzlichen Schutz vor Überhitzung des Verbrennungsmotors, ggf. sogar auch des Fahrantriebs.
- Ausreizen der üblichen sog. "Drehzahlabsenkung", ohne die Gefahr ungehindert den Verbrennungsmotor zu überhitzen
- Bevor eine bislang übliche Überwachung des Verbrennungsmotor (-herstellers) die Leistung reduziert, wird die Motordrehzahl durch Erfindung erhöht und dem Benutzer steht weiterhin die volle Leistung des Verbrennungsmotors zur Verfügung.
- Es kann verhindert werden, dass es zur Notabschaltung mit Vermerk im Fehlerspeicher kommt.

Generell macht sich die Erfindung in vorteilhafter Weise zunutze, dass aktuelle Eigenschaften von Verbrennungsmotoren in vorteilhafter Weise berücksichtigt werden und sie verknüpft diese mit den vorteilhaften Möglichkeiten von elektronischen Motorsteuerungen und/oder Fahrantriebsteuerungen.

### Ausführungsbeispiel

Ein Ausführungsbeispiel der Erfindung ist in der Zeichnung dargestellt und wird anhand der einzigen Figur nachfolgend näher erläutert.

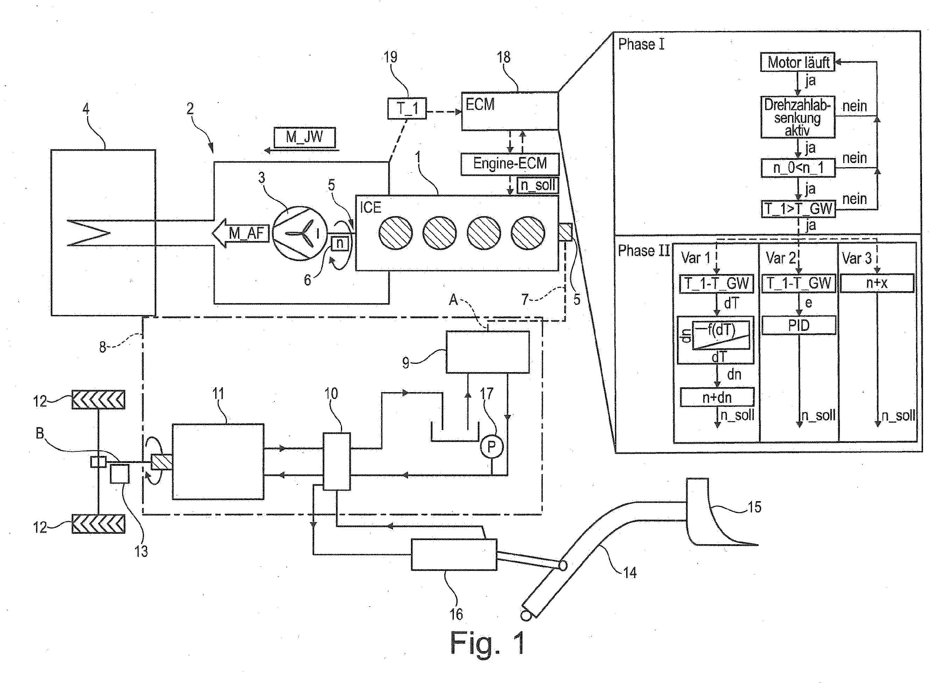

Figur 1 zeigt ein schematisches Schaubild eines Teils einer Antriebseinheit gemäß der Erfindung.

In Figur 1 ist sehr schematisch eine Antriebseinheit gemäß der Erfindung dargestellt, wobei ein Verbrennungsmotor 1 bzw. Dieselmotor 1 und ein Kühlsystem 2 mit einem Lüfter 3 vorgesehen ist. Der Lüfter 3 generiert einen Luftstrom M_AF, der einen Wärmeüberträger/-tauscher 4 kühlt und in dem ein Kühlmedium bzw. eine Kühlflüssigkeit/-Kühlströmung M_JW zur Kühlung des Dieselmotors 1 vorgesehen ist.

Hierbei treibt der Dieselmotor 1 bzw. dessen drehbare Motorwelle 5 den Lüfter 3 direkt an, d.h. diese sind mechanisch (starr) gekoppelt. Alternativ oder in Kombination hierzu kann der Lüfter 3 auch per sog. "Viscokupplung" mit der Motorwelle 5 gekoppelt werden, der Lüfter 3 kann auch auf der Motorwelle 5 sitzen, der Lüfter 3 kann auch auf einer anderen, eigenen Lagerung oder Hilfslagerung wie z.B. Wasserpumpe etc., gelagert werden und/oder der Lüfter 3 kann auch mittels Riemenantrieb oder Stirnradantrieb oder dergleichen angetrieben werden.

Vorteilhafterweise ist ein Drehzahlsensor 6 zur Erfassung der Drehzahl n der Motorwelle 5 und zugleich einer Antriebswelle des Lüfters 3 vorgesehen.

Darüber hinaus ist eine Verbindung 7, insb. mechanische und/oder starre und/oder mit einer nicht näher eingezeichneten Kupplung kuppelbare Verbindung 7 zu einem sog. "Hydrostat" 8 bzw. Hydraulik-Energieübertragungseinheit 8 mit einem Antrieb A und einem Abtrieb B. Der "Hydrostat" 8 umfasst u.a. eine Hydraulikpumpe 9, die auch direkt an die Motorwelle 5 bzw. den Verbrennungsmotor 1 angeflanscht/angeordnet werden kann (ohne nähere Darstellung). Die Hydraulikpumpe pumpt Hydraulikflüssigkeit bzw. Öl unter Druck p, der vorzugsweise mit einem Drucksensor 17 erfassbar ist, zu einem Steuerblock 10 bzw. einer hydraulischen Ventilvorrichtung 10 und schließlich zu einem Hydraulikmotor 11, der Lauf-/Antriebsräder 12 antreibt. Am Abtrieb B ist in vorteilhafter Weise ein weiterer Drehzahlsensor 13 zur Erfassung der Antriebsdrehzahl vorgesehen.

Weiterhin ist beispielhaft und sehr schematisch ein Hubarm 14 mit Schaufel 15 abgebildet. Ein Hydraulikzylinder 16 verschwenkt bzw. verstellt den Hubarm 14 und ist mit dem Steuerblock 10 hydraulisch verbunden bzw. mit Druck beaufschlagbar. Dem Fachmann ist bekannt wie bei Arbeits-/Baumaschinen mit Werkzeugen bzw. dem Hubarm 14 mit Schaufel 15 oder dergleichen und weiteren, nicht näherdargestellten Komponenten wie Hubzylindern etc. und/oder mit hydraulischer Lenkung, dies realisiert und betätigt werden kann.

In einer vorteilhaften Ausführungsform der Erfindung erfolgt die Auslegung des Kühlsystems 2, gerade auch bei Leistungscharakteristiken von modernen Verbrennungsmotoren 1 und zur Vermeidung der beschriebenen Gefahr des Überhitzens bei reduzierter Drehzahl n_0, z.B. sog. "Eco-Modus", wird in vorteilhafter Weise dadurch gemindert, dass z.B. eine Motoraustrittstemperatur T_1 in vorteilhafter Weise mit einem Temperatursensor 19 überwacht und einer elektronischen Regeleinrichtung ECM bzw. der erfindungsgemäßen Kontrolleinheit 18 zugeführt wird. Befindet sich der Verbrennungsmotor 1 in einem Betriebszustand mit abgesenkter Drehzahl n_0, z.B. im ECO-Mode, und/oder mit einer Ist-Drehzahl, die kleiner als die Maximal-Drehzahl n_max ist, sorgt in vorteilhafter Weise z.B. ein Algorithmus für die Erhöhung der Motordrehzahl n.

In der Folge erhöht sich ebenfalls die Drehzahl n des Lüfters 3 und die erzwungene Konvektion am Wärmeübertrager 4 wird gesteigert, so dass sich eine bessere Wärmeübertragung vom Motorkühlwasser (sog. "Jacket Water") an die Kühlluft ergibt. Dadurch wird die Temperatur am Motoraustritt abgesenkt.

In Figur 1 sind einerseits die relevanten Komponenten in einem Schema abgebildet und stellt andererseits beispielhaft einen möglichen, vorteilhaften Ablauf eines derartigen Algorithmus schematisch dar, der in vorteilhafter Weise auf einem Electronic Control Module ECM bzw. der erfindungsgemäßen Kontrolleinheit 18 implementiert ist.

In Phase I, d.h. im sog. Normal-Betrieb im Sinn der Erfindung, wird der Betriebszustand des Verbrennungsmotors 1 abgefragt. Die Transition von Phase I nach Phase II ist in vorteilhafter Weise an Bedingungen geknüpft, die in vorteilhafter Weise sicherstellen sollen, dass möglichst kein ungewollter Eingriff und damit auch keine nachteilige Beeinflussung der Motordrehzahl n erfolgt. So wird beispielsweise überprüft ob u.a. der Motor 1 läuft, ob eine Drehzahlabsenkung des Motors 1 aktiv ist, z.B. sog. "ECO-Mode", ob eine Ist-Drehzahl n_0 tatsächlich unter einer sog. Nenndrehzahl n_1 liegt bzw. ob die Ist-Drehzahl n_0 kleiner als die Maximal-Drehzahl n_max ist und/oder ob die Motoraustrittstemperatur T_1 einen festzulegenden Temperaturgrenzwert T_GW überschreitet.

Sind diese vorteilhaften Bedingungen und ggf. auch weitere, vorteilhafte Bedingungen erfüllt, so erfolgt in vorteilhafter Weise die Transition zu Phase II, d.h. zu einem Grenztemperatur-Betrieb im Sinn der Erfindung, in welcher/welchen die vorteilhafte Beeinflussung/Änderung der Drehzahl n der Motorwelle 5 gemäß der Erfindung stattfindet bzw. realisiert wird.

Prinzipiell sind vielfältige Möglichkeiten denkbar, wie sich die Drehzahl n beeinflussen lässt. Exemplarisch sind drei vorteilhafte Varianten nachfolgend und in Figur 1 schematisch bzw. grob skizziert. Die in Figur 1 rechts abgebildete Skizze ist in vorteilhafter Weise möglichst so zu verstehen, dass jeweils nur ein Strang genutzt wird:
- Variante 1 bzw. "Var 1": Zunächst wird in vorteilhafter Weise eine Differenz zwischen Motoraustrittstemperatur T_1 und dem Grenzwert T_GW gebildet. Da T_1>T_GW ergibt sich eine positive Differenz dT. Diese Differenz dT dient als Eingangssignal für ein Kennfeld bzw. mathematische Funktion oder eine anders umsetzbare mathematische Operation, die einen Zusammenhang zwischen dT und einer gewünschten Motordrehzahlerhöhung dn herstellt, so dass sich dn = f(dT) schreiben lässt. f(dT) kann jede unterschiedlichste Ausprägungen haben. Im letzten Schritt wird z.B. die Ist-Motordrehzahl n mit dn addiert und somit eine neue, erhöhte Solldrehzahl n_soll generiert, die dann mittels der Kontrolleinheit ECM, 18 umgesetzt wird, d.h. der Motor 1 bzw. dessen Kraftstoffzufuhr etc. derart gesteuert/verändert wird, so dass dessen Ist-Drehzahl n gleich der generierten Solldrehzahl n_soll ist.
- Variante 2 bzw. "Var 2": Auch hier wird in vorteilhafter Weise zunächst eine Differenz gebildet, dessen Ergebnis als Regelabweichung e bezeichnet werden kann. Diese Regelabweichung e dient als Eingangssignal eines digital Reglers, beispielsweise in Form eines PID-Reglers. Dessen Ausgang wiederum beschreibt die neue Solldrehzahl n_soll, womit in o.g. Weise der Motor 1 angesteuert und betrieben wird.
- Variante 3 bzw. "Var 3": hier wird in vorteilhafter Weise ein festzulegender Summand x der Ist-Drehzahl zugeschlagen, um eine neue Solldrehzahl n_soll zu generieren, womit in o.g. Weise der Motor 1 angesteuert und betrieben wird.

Bei dieser Variante können auch mehrere z.B. drei Temperaturbereiche mit jeweils unterschiedlichen Summanden x, d.h. unterschiedlich großen Summanden x1, x2, x3, xN in vorteilhafter Weise vorgesehen werden, so dass z.B. bei zunehmender Temperatur T_1 unterschiedlich stark, d.h. massiver, eingegriffen und gekühlt wird. Dies entspricht im Wesentlichen einer Art "Sprungfunktion".

Egal welche der vorteilhaften Varianten Verwendung findet, am Ende wirkt sich der Ablauf auf die Ist-Drehzahl n in der Art aus, dass diese gemäß der Erfindung erhöht wird, nämlich auf die erfindungsgemäße Solldrehzahl n_soll (vgl. Figur 1).

Generell können neben den konstruktiven und materiellen Eigenschaften von Wärmeübertragern 4 der Arbeitsmaschine, insbesondere die Massenströme (intern und extern) für die übertragbare Wärme von Bedeutung sein. Je größer beispielsweise der luftseitige Massenstrom ist, bei gleicher Eingangstemperatur, desto größer ist die übertragbare Wärme. Bei mobilen Arbeitsmaschinen wird die Konvektion am Wärmeübertrager 4 häufig durch einen oder mehrere Lüfter 3 erzwungen. Die Drehzahl n des Lüfters 3 ist bei mechanischem Antrieb stets abhängig von der Motordrehzahl n.

### Bezugszeichenliste

- 1: Verbrennungsmotor
- 2: Kühlsystem
- 3: Lüfter
- 4: Wärmetauscher
- 5: Motorwelle
- 6: Sensor
- 7: Verbindung
- 8: Hydrostat
- 9: Pumpe
- 10: Steuerblock
- 11: Motor
- 12: Laufrad
- 13: Sensor
- 14: Hubarm
- 15: Schaufel
- 16: Hydraulikzylinder
- 17: Sensor
- 18: Kontrolleinheit
- 19: Sensor

- A: Antrieb
- B: Abtrieb
- e: Regelabweichung
- ECM: Electronic Control Module
- dn: Drehzahlerhöhung
- dT: Temperaturerhöhung
- ICE: Internal Combustion Engine
- M_AF: Luftstrom
- M_JW: Kühlströmung
- n_0: reduzierte Drehzahl
- n_1: Nenndrehzahl
- n_soii: Solldrehzahl
- p: Druck
- T_GW: Temperaturgrenzwert
- T_1: Motoraustrittstemperatur
- x: Summand

## Patentansprüche

1. Mobile Arbeitsmaschine, insbesondere Radlader, Teleskoplader, Bagger, Traktor, Bodenverdichtungsvorrichtung wie eine Walze, oder dergleichen, mit einem Tragrahmen und mit einer Antriebseinheit zum Antreiben wenigstens eines Antriebselementes (12), z.B. Antriebsrad/-walze und/oder Kettenfahrwerk oder Vibrationselement, und/oder eines Arbeitselementes (14, 15), z.B. Greifarm, Schaufel (15), Gabel, Vibrationselement, wobei die Antriebseinheit als hydromechanische, insb. hydrostatische Antriebseinheit mit wenigstens einem eine Motorachse (5) aufweisenden Verbrennungsmotor (1) zum Erzeugen von mechanischer Antriebsenergie sowie wenigstens eine zumindest eine Hydraulikflüssigkeit sowie einen Antrieb (A) und einen Abtrieb (B) aufweisende Hydraulik-Energieübertragungseinheit (8) mit wenigstens einer Hydraulikpumpe (9) und einem Hydraulikmotor (11) zum Umwandeln der mechanischen Antriebsenergie in eine hydraulische Antriebsenergie zumindest für das wenigstens eine Antriebselement (12) ausgebildet ist, wobei die Motorachse (5) mit einer Drehzahl (n) drehbar ist, wobei wenigstens eine elektrische und/oder elektronische Kontrolleinheit (18, ECM) zum Kontrollieren der Antriebseinheit vorgesehen ist, wobei wenigstens ein Temperatursensor (19) zur Erfassung einer Ist-Betriebstemperatur (T_1) der Antriebseinheit, insb. des Verbrennungsmotors (1), vorgesehen ist, wobei die elektrische und/oder elektronische Kontrolleinheit (18) wenigstens eine Soll-Grenz-Temperatur, insb. Überhitzungstemperatur, der Antriebseinheit und/oder des Verbrennungsmotors (1) umfasst, wobei in einem Normal-Betrieb die Motorwelle (5) des Verbrennungsmotors (1) mit einer Normal-Drehzahl (n_0) dreht, **dadurch gekennzeichnet, dass** in einem Grenztemperatur-Betrieb, wobei die Ist-Betriebstemperatur (T_1) größer als oder gleich wie die Soll-Grenz-Temperatur (T_GW) ist, die elektrische und/oder elektronische Kontrolleinheit (18) derart den Verbrennungsmotor (1) kontrolliert, dass sich die Motorwelle (5) des Verbrennungsmotors (1) mit einer ersten Drehzahl (n_soll) dreht, wobei die erste Drehzahl (n_soll) der Motorwelle (5) größer als die Normal-Drehzahl (n_0) der Motorwelle (5) im Normal-Betrieb ist.

2. Arbeitsmaschine nach Anspruch 1, **dadurch gekennzeichnet, dass** im Grenztemperatur-Betrieb die elektrische und/oder elektronische Kontrolleinheit (18) derart die Hydraulik-Energieübertragungseinheit (8) kontrolliert, dass sich die erste Drehzahl (n_soll) der Motorwelle (5) nicht auf eine Fahrgeschwindigkeit der Arbeitsmaschine und/oder einer Antriebsdrehzahl des Antriebselementes (12) auswirkt.

3. Arbeitsmaschine nach einem der vorgenannten Ansprüche, **dadurch gekennzeichnet, dass** die elektrische und/oder elektronische Kontrolleinheit (18) derart die Hydraulik-Energieübertragungseinheit (8) kontrolliert, dass im Grenztemperatur-Betrieb ein Grenz-Übersetzungsverhältnis der Hydraulik-Energieübertragungseinheit (8) zwischen Antrieb (A) und Abtrieb (B) kleiner als ein Übersetzungsverhältnis zwischen Antrieb (A) und Abtrieb (B) im Normal-Betrieb ist.

4. Arbeitsmaschine nach einem der vorgenannten Ansprüche, **dadurch gekennzeichnet, dass** die Antriebseinheit wenigstens eine Kühleinheit (2) zum Kühlen des Verbrennungsmotors (1) umfasst.

5. Arbeitsmaschine nach einem der vorgenannten Ansprüche, **dadurch gekennzeichnet, dass** die Kühleinheit wenigstens eine Wärmeübertragungseinheit (4) zum Übertragen von Abwärme des Verbrennungsmotors (1) auf ein Wärmemedium wie Kühlwasser aufweist und/oder dass die Kühleinheit (2) wenigstens eine Kühllufteinheit (3) zum Erzeugen einer Kühlluftströmung zum Kühlen des Verbrennungsmotors (1) und/oder des Wärmemediums umfasst.

6. Arbeitsmaschine nach einem der vorgenannten Ansprüche, **dadurch gekennzeichnet, dass** wenigstens eine mechanische Verbindungseinheit (5) zwischen der Kühllufteinheit (3) und dem Verbrennungsmotor (1) und/oder der Motorwelle (5) vorgesehen ist.

7. Arbeitsmaschine nach einem der vorgenannten Ansprüche, **dadurch gekennzeichnet, dass** die elektrische und/oder elektronische Kontrolleinheit (18) derart den Verbrennungsmotor (1) kontrolliert, dass im Grenztemperatur-Betrieb die erste Drehzahl (n_soll) eine Funktion von der Ist-Betriebstemperatur (T_1) ist.

8. Arbeitsmaschine nach einem der vorgenannten Ansprüche, **dadurch gekennzeichnet, dass** die elektrische und/oder elektronische Kontrolleinheit (18) derart den Verbrennungsmotor (1) kontrolliert, dass im Grenztemperatur-Betrieb die erste Drehzahl (n_soll) die Summe aus der Normal-Drehzahl (n_0) plus einer definierten Drehzahldifferenz (x) ist.

9. Arbeitsmaschine nach einem der vorgenannten Ansprüche, **dadurch gekennzeichnet, dass** die elektrische und/oder elektronische Kontrolleinheit (18) wenigstens einen Regler, insb. einen PID-Regler, umfasst und derart den Verbrennungsmotor (1) kontrolliert, dass im Grenztemperatur-Betrieb die erste Drehzahl (n_soll) als Regelgröße und die Ist-Betriebstemperatur (T_1) als Führungsgröße ausgebildet sind.

10. Arbeitsmaschine nach einem der vorgenannten Ansprüche, **dadurch gekennzeichnet, dass** wenigstens eine Aufladeeinheit, insb. ein Abgasturbolader, zum Verdichten der dem Verbrennungsmotor (1) zugeführten Motorluft vorgesehen ist.

11. Arbeitsmaschine nach einem der vorgenannten Ansprüche, **dadurch gekennzeichnet, dass** der Verbrennungsmotor (1) wenigstens eine zumindest eine Einspritzdüse aufweisende Einspritzeinheit zum Einspritzen von Kraftstoff in einen Motorraum/-Zylinder und/oder in ein Saugrohr und/oder in eine Vorkammer umfasst.

12. Verfahren zum Betreiben einer Arbeitsmaschine nach einem der vorgenannten Ansprüche.

## Claims

1. Mobile work machine, in particular wheel loader, telescopic handler, excavator, tractor, soil compaction apparatus such as a roller, or the like, with a load-bearing frame and with a drive unit for driving at least one drive element (12), for example a drive wheel/roller and/or crawler track unit or vibratory element, and/or a work element (14, 15), for example a gripping arm, scoop (15), fork, vibratory element, wherein the drive unit is in the form of a hydromechanical, in particular hydrostatic, drive unit having at least one internal combustion engine (1), which has an engine axle (5), for generating mechanical drive energy and also at least one hydraulic energy transmission unit (8), which comprises at least one hydraulic fluid and a drive (A) and an output (B) and at least one hydraulic pump (9) and a hydraulic motor (11), for converting the mechanical drive energy into hydraulic drive energy at least for the at least one drive element (12), wherein the engine axle (5) is rotatable at a speed (n), wherein at least one electrical and/or electronic control unit (18, ECM) is provided for controlling the drive unit, wherein at least one temperature sensor (19) is provided for detecting an actual operating temperature (T_1) of the drive unit, in particular of the internal combustion engine (1), wherein the electrical and/or electronic control unit (18) comprises at least one setpoint limit temperature, in particular overheating temperature, of the drive unit and/or of the internal combustion engine (1), wherein, during normal operation, the engine shaft (5) of the internal combustion engine (1) rotates at a normal rotation speed (n_0), **characterized in that**, during limit temperature operation, wherein the actual operating temperature (T_1) is greater than or equal to the setpoint limit temperature (T_GW), the electrical and/or electronic control unit (18) controls the internal combustion engine (1) in such a way that the engine shaft (5) of the internal combustion engine (1) rotates at a first rotation speed (n_soll), wherein the first rotation speed (n_soll) of the engine shaft (5) is greater than the normal rotation speed (n_0) of the engine shaft (5) during normal operation.

2. Work machine according to Claim 1, **characterized in that**, during limit temperature operation, the electrical and/or electronic control unit (18) controls the hydraulic energy transmission unit (8) in such a way that the first rotation speed (n_soll) of the engine shaft (5) has no effect on a speed of travel of the work machine and/or a drive rotation speed of the drive element (12).

3. Work machine according to either of the preceding claims, **characterized in that** the electrical and/or electronic control unit (18) controls the hydraulic energy transmission unit (8) in such a way that, during limit temperature operation, a limit transmission ratio of the hydraulic energy transmission unit (8) between the drive (A) and the output (B) is lower than a transmission ratio between the drive (A) and the output (B) during normal operation.

4. Work machine according to any of the preceding claims, **characterized in that** the drive unit comprises at least one cooling unit (2) for cooling the internal combustion engine (1).

5. Work machine according to any of the preceding claims, **characterized in that** the cooling unit has at least one heat transfer unit (4) for transferring waste heat from the internal combustion engine (1) to a heat transfer medium such as cooling water, and/or **in that** the cooling unit (2) comprises at least one cooling air unit (3) for generating a cooling air flow for cooling the internal combustion engine (1) and/or the heat transfer medium.

6. Work machine according to any of the preceding claims, **characterized in that** at least one mechanical connecting unit (5) is provided between the cooling air unit (3) and the internal combustion engine (1) and/or the engine shaft (5).

7. Work machine according to any of the preceding claims, **characterized in that** the electrical and/or electronic control unit (18) controls the internal combustion engine (1) in such a way that, during limit temperature operation, the first rotation speed (n_soll) is a function of the actual operating temperature (T_1).

8. Work machine according to any of the preceding claims, **characterized in that** the electrical and/or electronic control unit (18) controls the internal combustion engine (1) in such a way that, during limit temperature operation, the first rotation speed (n_soll) is the sum of the normal rotation speed (n_0) plus a defined rotation speed difference (x).

9. Work machine according to any of the preceding claims, **characterized in that** the electrical and/or electronic control unit (18) comprises at least one controller, in particular a PID controller, and controls the internal combustion engine (1) in such a way that, during limit temperature operation, the first rotation speed (n_soll) is in the form of a control variable and the actual operating temperature (T_1) is in the form of a reference variable.

10. Work machine according to any of the preceding claims, **characterized in that** at least one charging unit, in particular an exhaust gas turbocharger, is provided for compressing the engine air supplied to the internal combustion engine (1).

11. Work machine according to any of the preceding claims, **characterized in that** the internal combustion engine (1) comprises at least one injection unit, which has at least one injection nozzle, for injecting fuel into an engine compartment/cylinder and/or into an intake manifold and/or into a prechamber.

12. Method for operating a work machine according to any of the preceding claims.

## Revendications

1. Machine de travail mobile, en particulier chargeur à roues, chargeur télescopique, excavatrice, tracteur, dispositif de compactage de sol tel qu'un rouleau ou similaire, ladite machine de travail mobile comprenant un cadre de support et une unité d'entraînement destinée à entraîner au moins un élément d'entraînement (12), par exemple une roue d'entraînement/un rouleau et/ou un mécanisme de roulement à chenilles ou un élément vibrant et/ou un élément de travail (14, 15), par exemple un bras de préhension, une pelle (15), une fourche, un élément vibrant, l'unité d'entraînement étant conçue comme une unité d'entraînement hydromécanique, en particulier hydrostatique, qui comprend au moins un moteur à combustion interne (1), comportant un axe de moteur (5) et destiné à générer de l'énergie d'entraînement mécanique, et au moins une unité de transmission d'énergie hydraulique (8), comportant au moins un liquide hydraulique et un entraînement (A) et une sortie (B) et comprenant au moins une pompe hydraulique (9) et un moteur hydraulique (11) destiné à convertir l'énergie d'entraînement mécanique en énergie d'entraînement hydraulique destinée au moins à l'au moins un élément d'entraînement (12), l'axe de moteur (5) pouvant tourner à une vitesse de rotation (n), au moins une unité de commande électrique et/ou électronique (18, ECM) étant prévue pour commander l'unité d'entraînement, au moins un capteur de température (19) étant prévu pour détecter une température de fonctionnement réelle (T_1) de l'unité d'entraînement, en particulier du moteur à combustion interne (1), l'unité de commande électrique et/ou électronique (18) comprenant au moins une température limite cible, en particulier une température de surchauffe, de l'unité d'entraînement et/ou du moteur à combustion interne (1), l'arbre de moteur (5) du moteur à combustion interne (1) tournant en fonctionnement normal à une vitesse de rotation normale (n_0), **caractérisée en ce qu'**en fonctionnement à température limite, la température de fonctionnement réelle (T_1) étant supérieure ou égale à la température limite cible (T_GW), l'unité de commande électrique et/ou électronique (18) commande le moteur à combustion interne (1) de manière à ce que l'arbre de moteur (5) du moteur à combustion interne (1) tourne à une première vitesse de rotation (n_soll), la première vitesse de rotation (n_soll) de l'arbre de moteur (5) étant supérieure à la vitesse de rotation normale (n_0) de l'arbre de moteur (5) en fonctionnement normal.

2. Machine de travail selon la revendication 1, **caractérisée en ce qu'**en fonctionnement à température limite l'unité de commande électrique et/ou électronique (18) commande l'unité de transmission d'énergie hydraulique (8) de manière à ce que la première vitesse de rotation (n_soll) de l'arbre de moteur (5) n'atteigne pas une vitesse de roulement de la machine de travail et/ou une vitesse de rotation d'entraînement de l'élément d'entraînement (12).

3. Machine de travail selon l'une des revendications précédentes, **caractérisée en ce que** l'unité de commande électrique et/ou électronique (18) commande l'unité de transmission d'énergie hydraulique (8) de manière à ce qu'en fonctionnement à température limite un rapport de transmission limite de l'unité de transmission d'énergie hydraulique (8) entre l'entraînement (A) et la sortie (B) soit inférieur à un rapport de transmission entre l'entraînement (A) et la sortie (B) en fonctionnement normal.

4. Machine de travail selon l'une des revendications précédentes, **caractérisée en ce que** l'unité d'entraînement comprend au moins une unité de refroidissement (2) destinée à refroidir le moteur à combustion interne (1).

5. Machine de travail selon l'une des revendications précédentes, **caractérisée en ce que** l'unité de refroidissement comporte au moins une unité de transfert de chaleur (4) destinée à transférer la chaleur perdue du moteur à combustion interne (1) vers un milieu caloporteur tel que de l'eau de refroidissement et/ou **en ce que** l'unité de refroidissement (2) comporte au moins une unité d'air de refroidissement (3) destinée à générer un écoulement d'air de refroidissement afin de refroidir le moteur à combustion interne (1) et/ou le milieu caloporteur.

6. Machine de travail selon l'une des revendications précédentes, **caractérisée en ce qu'**au moins une unité de liaison mécanique (5) est prévue entre l'unité d'air de refroidissement (3) et le moteur à combustion interne (1) et/ou l'arbre de moteur (5).

7. Machine de travail selon l'une des revendications précédentes, **caractérisée en ce que** l'unité de commande électrique et/ou électronique (18) commande le moteur à combustion interne (1) de manière à ce qu'en fonctionnement à température limite la première vitesse de rotation (n_soll) soit une fonction de la température de fonctionnement réelle (T_1).

8. Machine de travail selon l'une des revendications précédentes, **caractérisée en ce que** l'unité de commande électrique et/ou électronique (18) commande le moteur à combustion interne (1) de manière à ce qu'en fonctionnement à température limite la première vitesse de rotation (n_soll) soit la somme de la vitesse de rotation normale (n_0) plus une différence de vitesse de rotation définie (x).

9. Machine de travail selon l'une des revendications précédentes, **caractérisée en ce que** l'unité de commande électrique et/ou électronique (18) comprend au moins un régulateur, notamment un régulateur PID, et commande le moteur à combustion interne (1) de manière à ce qu'en fonctionnement à température limite la première vitesse de rotation (n_soll) est conçue comme une grandeur de régulation et la température de fonctionnement réelle ( T_1) est conçue comme une grandeur de référence.

10. Machine de travail selon l'une des revendications précédentes, **caractérisée en ce qu'**au moins une unité de suralimentation, en particulier un turbocompresseur à gaz d'échappement, est prévue pour comprimer l'air de moteur fourni au moteur à combustion interne (1).

11. Machine de travail selon l'une des revendications précédentes, **caractérisée en ce que** le moteur à combustion interne (1) comprend au moins une unité d'injection qui comporte au moins une buse d'injection et qui est destinée à injecter du carburant dans un compartiment/cylindre moteur et/ou dans un collecteur d'admission et/ou dans une antichambre.

12. Procédé de fonctionnement d'une machine de travail selon l'une des revendications précédentes.
